Europäisches Patentamt

European Patent Office

Office européen des brevets

(19)

(11) Publication number: 0 145 200 A1

# EUROPEAN PATENT APPLICATION

(12)

(21) Application number: 84307345.3

(22) Date of filing: 25.10.84

(51) Int. Cl.⁴: G 11 B 5/82

(30) Priority: 27.10.83 US 545909

(43) Date of publication of application:
19.06.85 Bulletin 85/25

(84) Designated Contracting States:
DE FR GB IT

(71) Applicant: MINNESOTA MINING AND
MANUFACTURING COMPANY
3M Center, P.O. Box 33427
St. Paul, MN 55133(US)

(72) Inventor: Skow, Lynn R. c/o Minnesota Mining and
Manufacturing Company 2501 Hudson Road
St. Paul Minnesota 55133(US)

(72) Inventor: Louks, John W. c/o Minnesota Mining and
Manufacturing Company 2501 Hudson Road
St. Paul Minnesota 55133(US)

(74) Representative: Baillie, Iain Cameron et al,
c/o Ladas & Parry Isartorplatz 5
D-8000 München 2(DE)

(54) Double-sided stretched surface recording disk.

(57) A double-sided stretched surface recording disk (10)
includes a circular, planar main body (24) at the periphery of
which are located two reference surfaces (20, 22).

Iron-oxide coated polymer films (14, 16) are stretched
across the reference surfaces (20, 22) on each side of the
main body (24) and bonded to each other at an edge (30).

In a second embodiment, the disk main body (72) is
annular rather than circular and further includes reference
surfaces and a sharp edge located at the inner edge of the
disk body (72) which are the mirror image of the structure
located at the periphery of the recording disk. In this
embodiment films (74, 76) are attached to each other at the
outer and inner diameters of the annular main body (72).

EP 0 145 200 A1

./...

Croydon Printing Company Ltd.

**FIG. 2**

**FIG. 7**

Description

Double-Sided Stretched Surface Recording Disk

Technical Field

This invention relates generally to stretched surface recording disks which include a support structure and a thin film stretched in a plane parallel to the support body and attached to the periphery of the support. In particular, the invention relates to such a disk having two thin films stretched in planes parallel to the support and located on either side of the support.

Background Art

Stretched surface recording (SSR) disks generally consist of a rigid, circular support and a thin polymer film suitably attached to the periphery of the support. The film includes an iron-oxide outer coating which permits the disk to be utilized similar to linear magnetic tape to record and reproduce audio or visual signals.

The disk configuration functions the same as the linear tape configuration in that audio or video signals are imparted to the magnetic, iron-oxide coating and reproduced from this coating by means of a transducer head as the iron-oxide coated medium is transported relative to the head. The disk configuration has greater utility than the tape configuration, however, because the entire information recorded on the disk is located in a single plane. This allows the transducer head to rapidly access widely separated portions of the recorded material, an advantage which is not possible with linear tape configurations.

The development of SSR disks has progressed over the years from a rather simple configuration described in U.S. Patent No. 3,373,413, issued to Treseder, in which a film was stretched and clamped between two circular rings, to a dish-shaped support to which a stretched film was attached at the periphery as illustrated by U.S. Patent No. 3,509,274, issued to Kihara. Subsequently, U.S. Patent No.

3,537,083, issued to Voth, introduced the concept of bonding the film at the center of the support in addition to the support periphery, and U.S. Patent No. 3,599,226, issued to Lips, described an SSR disk which included two stretched film surfaces on either side of the support which were attached at the periphery and the center of the support.

Although the patents described above have described the general configuration and many desirable features of SSR disks, many practical problems yet remain as impediments to the mass production and general acceptance of SSR disks as a recording medium. These impediments include the problems of economically and reliably attaching a very thin film to a relatively thick support, ensuring that the film remains at a desired tension and planar with respect to the support, thermal expansion differentials between the support and the film, reduction of the usable recording area by the area necessary for bonding the film to the support, and the useful life of the bond between the film and the support.

Disclosure of Invention

The present invention addresses many of foregoing problems by providing a double-sided SSR disk in which two film surfaces are stretched across opposite sides of a support structure and bonded to each other, rather than each being separately bonded to the support. The periphery of the support has a sharp edge located at the bonding junction of the two films which is engaged by either a bonding adhesive or molten film material produced during the film bonding process to lock the films in position relative to the support. The support further includes at least two planar reference surfaces axially spaced from the bond area which ensure that the films remain planar and bonding of the films to the structure does not interfere with the flatness of the films.

In addition, a double-sided disk is disclosed in which the recording films are bonded around the center of the support in addition to the periphery.

Brief Description of Drawings

FIGURE 1 is a vertical sectional view of a first embodiment of an SSR disk according to the present invention;

FIGURE 2 is an enlarged, vertical sectional view of a portion of the SSR disk of FIGURE 1;

FIGURE 3 is a vertical sectional view of a second embodiment of an SSR disk according to the present invention;

FIGURE 4 is an elevational view schematically illustrating a fixture utilized in the production of the SSR disk of FIGURE 1 and a support comprising a portion of the SSR disk of FIGURE 1, both in cross-section;

FIGURE 5 is an enlarged, cross-sectional view of a portion of the fixture and SSR disk support of FIGURE 4 showing the SSR disk in a partially assembled condition;

FIGURE 6 is a view similar to that of FIGURE 5, showing the SSR disk in an assembled condition; and

FIGURE 7 is a vertical sectional view of a third embodiment of an SSR disk according to the present invention.

Description of the Preferred Embodiment

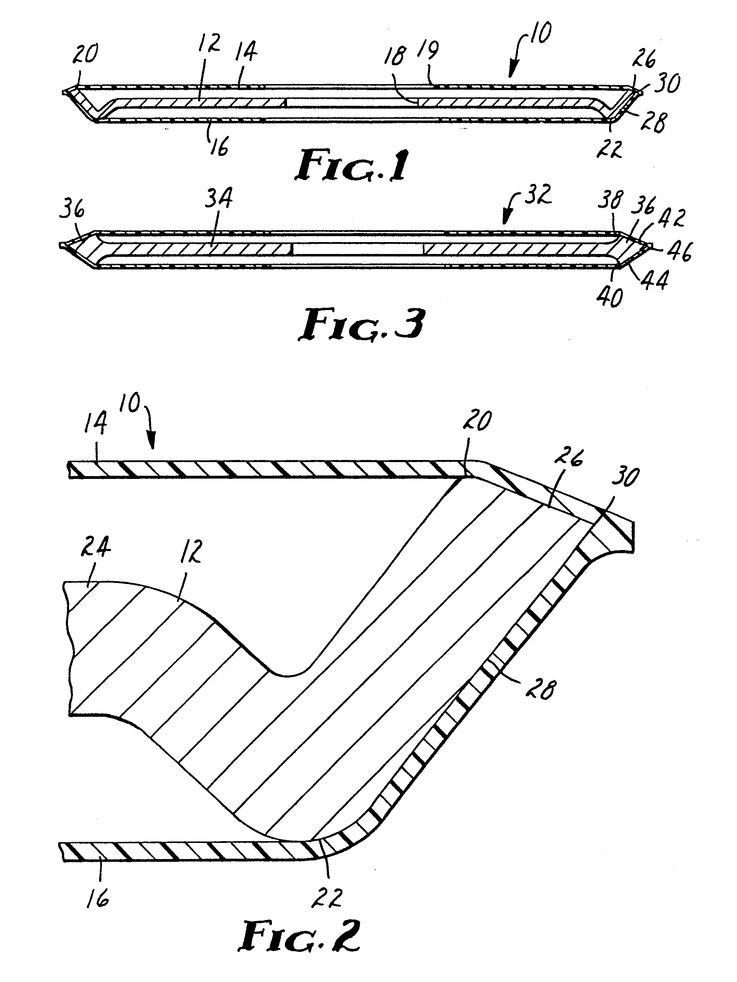

FIGURE 1 illustrates in diametral cross-section a stretched surface recording (SSR) disk 10 which includes a support 12, an upper stretched film 14, and a lower stretched film 16. The SSR disk 10 is adapted for use with electronic recording and reproducing equipment (not shown) in which the disk 10 is rotated and the outer surfaces of the films 14 and 16 are contacted by an electromagnetic transducer head which imparts signals to the films 14 or 16 or reproduces electronic signals from information previously imparted to the films 14 or 16. To this end, the stretched films 14 and 16 are provided on their outer surfaces with an iron-oxide coating as is well known in the audio and video tape arts. The equipment and electromagnetic transducer utilized in conjunction with the SSR disk 10 are similar to those presently utilized to record and reproduce audio or video signals with the exception that the recording medium is in the form of a circular disk rather than a longitudinal tape. Although the technologies are similar, the disk configuration is advantageous over the tape configuration in that all information contained on the recording medium (here the upper and lower films 14 and 16) is contained in a plane and thus widely separated portions of the information may be rapidly accessed by simply repositioning the transducer head rather than winding the tape with respect to the transducer.

Returning to FIGURE 1, the support 12 may be manufactured of metal, plastic, or other suitable material and includes a central bore 18 which may be accessed by a spindle associated with the recording and reproduction equipment in order that the SSR disk 10 may be rotated. The films 14 and 16 are manufactured from a suitable polymer material, preferably polyethylene terapthalate, and each of the films 14 and 16 includes a central, circular cut-out portion 19 which permits access of the spindle to the support 12.

It is important that the films 14 and 16 be planar to prevent any loss of contact between the films 14 or 16 and the transducer head during operation which would result in gaps in information imparted to or reproduced from the disk 10. To ensure that the films 14 and 16 remain planar, the support 12 is provided, as best seen in FIGURE 2, with an upper reference surface 20 and a lower reference surface 22. These reference surfaces 20 and 22 are spaced above and below a planar main body portion 24 of the support 12 to define the furthermost axial extent of the support 12, and each provides an annular plane across which the films 14 and 16 may be stretched and removed from contact with the planar body portion 24 of the support 12. In the radially outward direction from the upper reference surface 20, the support 12 includes a downwardly sloped surface 26, and from the lower reference surface 22, the support 12 includes an upwardly sloped surface 28. These sloped surfaces 26 and 28 meet at a point axially intermediate the reference surfaces 20 and 22 to form a sharp edge 30 which defines the furthermost radial extent of the disk 10 and at which the upper film 14 and the lower film 16 are bonded to each other. The edge 30 is a relatively sharp edge between the major surfaces 26 and 28 as it has a radius preferrably not greater than 0.005 inch.

The films 14 and 16 may be adhesively or ultrasonically bonded to each other but are not necessarily bonded in any manner to the support 12 of the SSR disk 10. A direct bond between the support 12 and the films 14 and 16 may occur incidentally, but is not required for retention of the films 14 and 16. As will be explained in greater detail below, the sharp edge 30 is necessary to provide engagement between the films 14 and 16 and the support 12 to prevent any slippage or movement of the films 14 and 16 with respect to the support 12. At this point it should merely be recognized that the edge 30 is located below the reference surface 20 and above the reference surface 22 so that any separation of the films 14 or 16 with respect to the surfaces 26 or 28, or the edge 30, will not affect the flatness of the films 14 and 16 across the reference surfaces 20 and 22.

FIGURE 3 illustrates a second embodiment of an SSR disk 32 according to the present invention which includes a support 34 which has a solid rim 36, which is triangular in cross-section, as opposed to the formed periphery of the support 12 of the SSR disk 10 of FIGURE 1. Although the rim 36 of the disk 32 is different in shape than the support 12 of the disk 10 described with respect to FIGURES 1 and 2, the salent features remain. The solid rim 36 still includes raised reference surfaces 38 and 40 formed by the base angles of the triangular cross-section, inclined radially outwardly directed surfaces 42 and 44, and a sharp edge 46 at the intersection of the surfaces 42 and 44 which is located intermediate the reference surfaces 38 and 40. The features just described correspond in function to the respective features described with respect to the disk 10 of FIGURE 1 and illustrate that there are many workable configurations which may be assumed by the disk support 12 or 34.

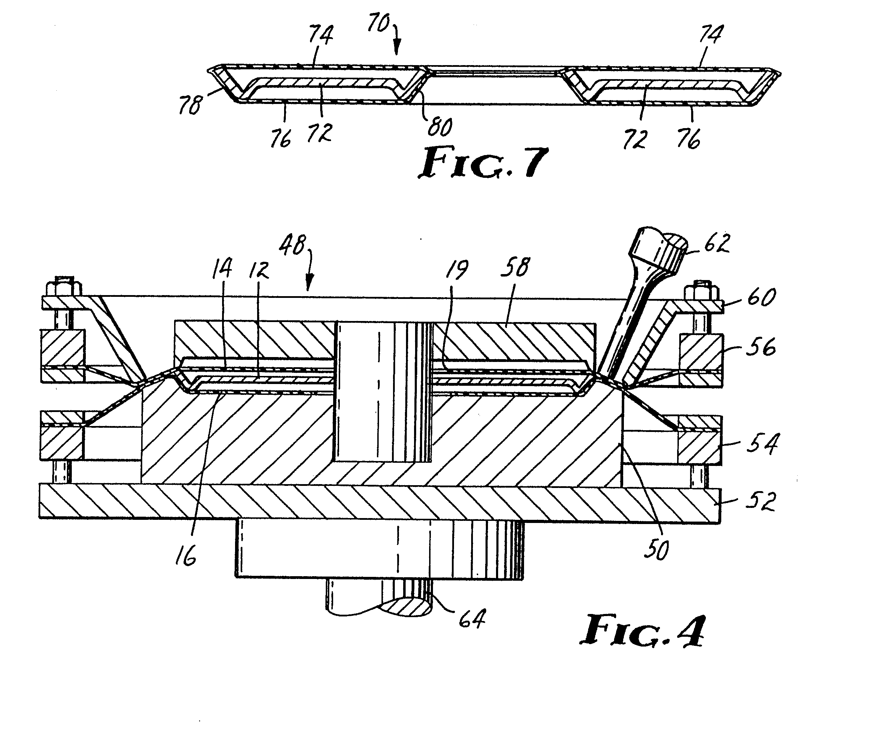

FIGURE 4 illustrates schematically a fixture, generally indicated as 48, which may be utilized in the production of the SSR disk 10 or 32 of FIGURES 1 or 3. For convenience, reference will be made only to the SSR disk 10 of FIGURE 1. Although the films 14 and 16 may be bonded to each other by means of an adhesive, the preferred method of bonding is by ultrasonic welding, and this process will be described. The fixture 48 includes a welding anvil 50, a base 52, a lower film clamp 54, an upper film clamp 56, a disk support clamp 58, an upper film tensioner 60 and a welding horn 62.

To produce an SSR disk 10, the lower film 16 is first positioned across the anvil 50 and annularly clamped within the lower film clamp 54. The disk support 12 is then centered with respect to the fixture 48 and placed atop the lower film 16. Over the support 12 is stretched the upper film 14 which is held in position by the upper clamp 56. The upper film tensioner 60 is then lowered to deflect the film 14 to the anvil 50 and produce the desired tension in the upper film 14. At this point the disk support clamp 58 is lowered to contact the upper film 14 and force the disk support 12 downwardly into contact with the anvil 50 through the lower film 16 and further tension the lower film 16. Finally, the welding horn 62 is lowered into pressure contact with the welding anvil 50, through the layers of film 14 and 16, and the base 52, and consequently the entire fixture 48, is rotated by means of a shaft 64.

Energization of the welding horn 62 during rotation of the fixture 48 will result in the upper film 14 and the lower film 16 being partially melted and fused together around the entire periphery of the disk support 12. Upon completion of the welding cycle, the SSR disk 10 is removed from the fixture 48 and the welded films 14 and 16 trimmed to produce a finished product. As an alternative to rotating the fixture 48, welding horn 62 may be revolved around the circumference of the clamp 58.

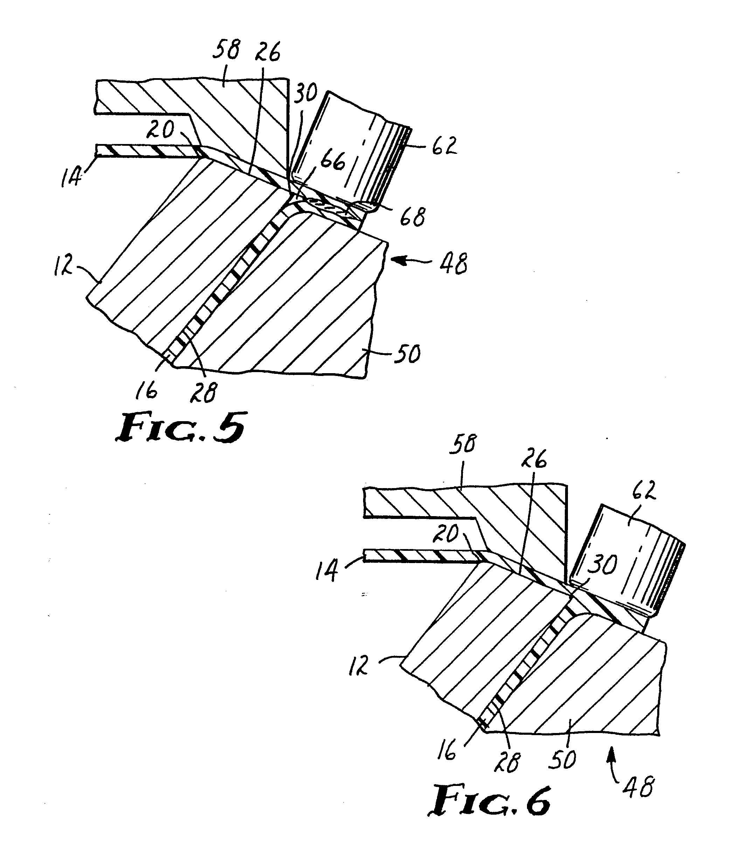

Details of the welding process are illustrated by FIGURES 5 and 6 wherein FIGURE 5 depicts a partially welded condition and FIGURE 6 depicts a fully welded and completely bonded joint. FIGURE 5 illustrates that in the assembled, but not yet welded, configuration a void 66 exists between the lower film 16 and the edge 30. This void 66 cannot be permitted to remain in the completed product because such a space would allow movement of the upper film 14 and the attached lower film 16 relative to the edge 30 and consequently the reference surfaces 20 and 22. This movement would result in an altered, and possibly undesirable, distribution of tensioning stresses in the films 14 and 16 and movement of recorded information tracks with respect to the center of the SSR disk 10.

To avoid these undesirable effects, the ultrasonic welding horn 62 is forced under pressure toward the welding anvil 50 through the upper and lower films 14 and 16. The result of this pressure is that when the polymer material of the films 14 and 16 melts, as indicated by the pool 68 shown in FIGURE 5, the molten material in the pool 68 is squeezed and extruded into the void 66. This extrusion completely fills and eliminates the void 66, as illustrated in FIGURE 6, and mechanically locks the upper and lower films 14 and 16 to the disk support 12 at the sharp corner 30. It is to be emphasized that no melting of the support 12 occurs and, therefore, there is no direct bonding between either of the films 14 and 16 and the support 12.

The advantages of bonding the films 14 and 16 to each other rather than the disk support 12 are numerous. Since the support 12 need not be melted to form the bond, the support 12 can be manufactured of metal to provide increased stiffness and rigidity. The bond requires less area than prior methods because an extremely strong bond is formed between the two films. The application of energy to the bond area need not be controlled as finely as is the case where it is attempted to weld a thin film to a relatively thick structure because the problem of sufficiently heating the thick structure without melting through the film is eliminated. In this regard it has been found that a heat-sinking effect of the metal anvil 50 and welding horn 62 prevents melting of the films throughout their thicknesses and greatly reduces or eliminates breakage of the film during welding. Finally, since the films are not bonded to the support, the films may be removed after assembly and the supports reused if defects appear in either of the films.

Although it might seem that the attachment of the films 14 and 16 to the disk support 12 is rather tenuous, it has been found that the films 14 and 16 are securely locked in place by the geometry of the corner 30 of the support 12, the tensile forces in the films 14 and 16, and friction generated between the films 14 and 16 and the sloped surfaces 26 and 28 of the support 12.

The angle of the sharp edge 30 or 46 of the disk supports 12 or 34 has been shown in FIGURES 1 and 3, respectively, as being approximately 55 degrees. This angle is preferable because it have been found to produce optimum locking of the films 14 and 16 to their respective supports 12 and 34 while producing a maximum area of the films 14 and 16 which may be utilized to record information.

Referring now to FIGURE 2, a larger angle between the inclined surfaces 26 and 28 would appear to be desirable because then the edge 30 is moved inwardly toward the reference surfaces 20 and 22 and thus a greater percentage of the overall diameter of the disk 10 is usable for information recordation. However, as this angle is increased, the bond between the films 14 and 16 is more subject to failure because the forces tending to separate the films 14 and 16 acts more to peel one film from the other rather than shear the bond area. A bond between two films such as that shown is much more prone to failure in a "peel" mode than a shear mode.

The likelihood of failure of the bond between the films 14 and 16 could be further decreased by extending the sharp edge 30 outwardly a greater distance from the reference surfaces 20 and 22 and thus decreasing the angle between the inclined surfaces 26 and 28. The bond would thus be more subject to shear than peel forces. However, extending the edge 30 outwardly would increase the radial distance between the reference surfaces 20 and 22 and the outer edge of the disk 10. This would decrease the percentage of the diameter of the disk 10 which is available for the recordation of information. For these reasons it has been found that it is desirable to maintain the angle of the edge 30 or 46 at about 55 degrees.

Although bonding of the films 14 and 16 has been described as preferably being accomplished by ultrasonic welding, it is believed a satisfactory bond can be achieved through the use of adhesives so long as sufficient adhesive is used and pressure is applied so that adhesive is extruded into and fills the void 66 depicted in FIGURE 5. This is necessary to retain the locking function of the bond described above. Ultrasonic welding is preferred over the use of adhesives because welding is neater, more efficient, less expensive, and results in a stronger bond between the films 14 and 16.

FIGURE 7 illustrates a third embodiment of an SSR disk, generally indicated as 70, which includes an annular support 72 rather than the circular supports 12 and 34 described above. The SSR disk 70 allows an upper film 74 and a lower film 76 to be bonded to each other at the center of the disk 70 in addition to the periphery. Attachment of the films 74 and 76 to the center may be desirable to produce increased stiffness of the films 74 and 76 and thus reduced penetration of the transducer head relative to the plane of the films 74 and 76.

The disk support 72 is provided at the outer edge with a structure 78 identical to that of FIGURES 1 and 2, and the films are bonded to each other in the manner described above. The film reference and attachment structure 80 located at the inner edge of the support 72 is likewise identical to the structure of FIGURES 1 and 2, and structure 78, with the exception that the attachment structure 80 at the inner edge of the disk support 72 is the mirror image of the structure 78 located at the outer edge of the support 72. The films 74 and 76 are bonded at the center of the disk 70 in a manner identical to the bonding of the films 74 and 76 at the periphery.

Although for simplicity FIGURE 7 depicts only reference and attachment structure 78 and 80 similar to that shown in FIGURES 1 and 2, it should be understood that the triangular rim 36 of FIGURE 3 could be provided at the inner and/or the outer edges of the disk support 72. It is simply required that the reference surfaces located to one side of the disk support be axially spaced an equal distance from the support to maintain the films parallel to the support in whatever combination of reference and attachment structures are used.

Although the present invention has been described with respect to certain specific embodiments, it is to be understood that the invention is not so limited. All modifications falling within the scope of the appended claims are to be considered part of the invention.

<u>Claims</u>                              **0145200**

1.  A stretched surface recording (10) disk comprising:

a disk-shaped support (12) including a generally circular planar main body (24) having an axis perpendicular to the plane of said main body (24), at least one annular reference surface (20) adjacent the periphery of said main body (24), said reference surface (20) being axially spaced from the plane of said main body (24) and defining the furthermost extent of said support (12) in said axial direction from said main body (24), and an annular, relatively sharp peripheral edge (30) defining the furthermost radial extent of said support (12); and

two films (14, 16), one (14) of which is stretched across said annular reference surface (20), and the other being positioned on the opposite axial side of said main body (24), said films (14, 16) being bonded to each other at said edge (30).

2.  A stretched surface recording disk (10) according to claim 1 wherein said support (12) is formed of uniform thickness material and includes a first annular extension extending radially outwardly and axially from said main body and a second annular extension extending radially outwardly from said first extension and axially opposite said first extension to terminate in an end surface (26) generally perpendicular to said second extension and producing radially inward (20) and outward (30) corners with the major surfaces of said second extension; the junction of said first and second extensions defining said at least one reference surface (22), said inward corner defining another reference surface (20), and said outward corner (30) being said sharp edge (30) which defines the furthermost radial extent of said support (12) and that edge (30) where said films (14, 16) are bonded to each other.

3. A stretched surface recording disk (10) according to claim 2 wherein said outward edge (30) has an included angle between said end surface (26) and said one major surface of approximately 55 degrees.

4. A stretched surface recording disk (10) according to claim 2 wherein each of said extensions are oriented at approximately 45 degrees with respect to the plane of said main body (24).

5. A stretched surface recording disk (32) according to claim 1 wherein said support (34) includes a rim (36) triangular in cross-section which is attached to said main body (24) at a point approximately midway along the base of said triangular cross-section (36) and wherein said base angles of said triangular cross-sectional rim are axially spaced reference surfaces (38, 40) and the apex (46) of said triangular cross-sectional rim (36) is said sharp edge (46) defining the furthermost radial extent of said support (34) and at which said films (14, 16) are bonded to each other.

6. A stretched surface recording disk (32) according to claim 5 wherein said apex (46) of said triangular cross-section (36) produces an included angle of approximately 55 degrees.

**FIG.1**

**FIG.3**

**FIG.2**

FIG. 7

FIG. 4

**FIG. 5**

**FIG. 6**

European Patent
Office

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 092 325 (MINNESOTA MINING) <br> * Page 8, line 28 - page 9, line 2; figure 4 * | 1,2 | G 11 B 5/82 |
| | --- | | |
| A | FR-A-2 372 488 (VEB ELEKTROTECHNIK EISENACH) <br> * Page 2, lines 4-19; page 3, lines 17-24; figure 3 * | 1 | |
| | --- | | |
| A | PATENT ABSTRACTS OF JAPAN vol. 6, no. 162, 25th August 1982, page (P-137) (1040); & JP-A-57-78634 (MATSUSHITA) 17-05-1982 | 1 | |
| | ----- | | |

TECHNICAL FIELDS
SEARCHED (Int. Cl.4)

G 11 B 5/00
G 11 B 7/24
G 11 B 17/32
G 11 B 23/00
G 11 B 25/04

The present search report has been drawn up for all claims

| Place of search <br> BERLIN | Date of completion of the search <br> 21-01-1985 | Examiner <br> WIBERGH S.R. |
|---|---|---|